# EUROPEAN PATENT APPLICATION

(11) **EP 1 340 763 A1**
(43) Date of publication of application: **03.09.2003**
(21) Application number: 02075760.5
(22) Date of filing: 26.02.2002
(51) Int. Cl.: C07F 7/18

(54) **Process for the preparation of trihydrocarbylsilylated unsaturated carboxylate monomers**

(71) Applicant: SIGMA COATINGS B.V., 1422 AD Uithoorn (NL)
(72) Inventor: Plehiers, Mark, 1000 Bruxelles (BE)
(74) Representative: Walsh, David Patrick

(57) **Abstract**

Process for the preparation of trihydrocarbylsilylated unsaturated carboxylate monomers comprising the step of reacting, in the presence of a catalyst, an hexahydrocarbyldisiloxane with an unsaturated carboxylic anhydride.

## Description

### Field of the invention

The invention relates to a new method for the preparation of trihydrocarbylsilylated carboxylate monomers

### Background

Antifouling paints are used to prevent and delay the fouling of underwater structures (e.g. ships' bottom, docks, fishnets, and buoys) by various marine organisms such as shells, seaweed, and aquatic bacteria. When such marine organisms adhere and propagate on an underwater structure like the bottom of a ship, the surface roughness of the whole ship may be increased to the point of inducing a decrease of velocity of the ship or an increase of fuel consumption. Further, removal of such aquatic organisms from the ship's bottom needs much labour and a long period of working time in a costly dry dock. In addition, if these organisms adhere and propagate on an underwater structure such as a steel structure, they deteriorate their anticorrosive coating films leading to a reducing of the lifetime of the underwater structure.

Underwater structures are therefore coated with antifouling paint employing polymers containing various hydrolysable groups and more specifically organosilyl groups.

Amongst those antifouling paints is for example, an antifouling paint of the hydrolysable self-polishing type proposed in WO 8402915 and JP 63215780 A, which employs a (meth)acrylic ester polymer having triorganosilyl group in side chains. Other examples of patents and patent applications related to the use of organosilyl acrylate polymers in antifouling compositions are EP 131626, US 4593055, US 4594365, JP 63118381 A, EP 0775733, WO 9638508, EP 802243, EP 0714957, JP 07018216 A, JP 01132668 A, JP 05077712 A, JP 01146969 A and US 4957989, which are hereby incorporated by reference.

Some of the polymers used in the above-described antifouling paints are based on silylated carboxylate monomers.

Several processes are known for the synthesis of silylated carboxylate monomers.

JP 5306290 A discloses a process to obtain a methacrylic functional group-containing organosilicon compound. The process comprises reacting methacrylic acid with a halogenoalkylsilane (e.g. trialkylsilylchloride) in the presence of a tertiary amine compound having a cyclic structure. This process has disadvantages such as the reduced availability and storage stability of the silyl chloride. Moreover, the reaction yields as a by-product a hydrogen halide (which provokes the corrosion of the production equipment) or a halide salt (which has to be removed by filtration).

A synthesis of trimethylsilyl methacrylate from methacrylic acid and hexamethyldisilazane is described by A.Chapman & A.D.Jenkins in J.Polym.Sci. Polym.Chem.Edn. vol 15, p.3075 (1977).

JP 10195084 A discloses the reaction of unsaturated carboxylic acids such as acrylic acid or methacrylic acid with a trialkylsilylhydride compound in the presence of a copper catalyst. One of the disadvantages of this method is the risk of hydrogenation of the unsaturated carboxylic anhydride due to a side reaction of the produced H₂ on the carbon-carbon double bond.

J.Valade describes in "Compte Rendu de l'Académie des Sciences" n° 246, p. 952-953 (1958) the reaction of hexamethyldisiloxane or hexaethyldisiloxane with acetic anhydride or benzoic anhydride in the presence of zinc chloride whereas maleic anhydride or succinic anhydride do not react with hexamethyldisiloxane or hexaethyldisiloxane in the presence of zinc chloride.

Therefore, an object of the present invention is to provide a novel process capable of readily preparing trihydrocarbylsilylated unsaturated carboxylate monomers in a high yield.
Another object of the present invention is to provide a novel process preparing said monomers from easily available starting materials.
A further object of the present invention is to provide a novel process offering an improvement vis-à-vis of the disadvantages disclosed above.

The present invention is based on the reaction of either linear or cyclic unsaturated carboxylic anhydrides with hexahydrocarbyldisiloxane to synthesise, in the presence of a catalyst, trihydrocarbylsilylated unsaturated carboxylate monomers.

### Summary of the invention

The present invention relates to a new process for the preparation of trihydrocarbylsilylated unsaturated carboxylate monomers of either general formula (I) 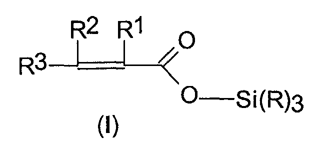 wherein
each R independently represents an alkyl, an aryl or a substituted aryl group, R¹, R² each independently represents a hydrogen atom or an alkyl group,
R³ represents a hydrogen atom, an alkyl group or -COOR⁶ wherein R⁶ represents an alkyl, an aryl or a substituted aryl group.
or general formula (**II**) 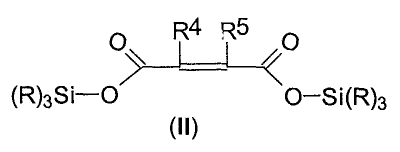 wherein
each R is as already defined above
R⁴, R⁵ each independently represents a hydrogen atom or an alkyl group.
which process comprises the step of reacting, in the presence of a catalyst, a hexahydrocarbyldisiloxane of formula (**III**) 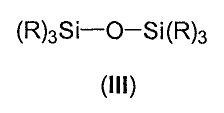 wherein
R is as already defined above
either with an unsaturated carboxylic anhydride of formula (IV), 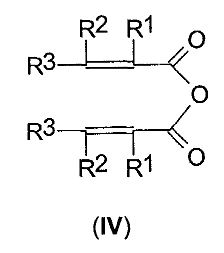
wherein
R¹, R², R³ are as already defined above
or with an unsaturated carboxylic anhydride of formula (**V**) 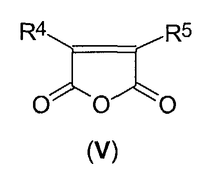 wherein R⁴, R⁵ are as already defined above.

Preferably, the catalyst used in the present invention consists of a mixture of a strong acid and a nucleophilic base.

In a preferred embodiment R and R⁶ each independently represent a linear, branched, cyclic alkyl, aryl or substituted aryl group, saturated or unsaturated, containing from 1 to 12 carbon atoms, preferably from 1 to 6 carbon atoms, more preferably from 1 to 4 carbon atoms, yet more preferably 4 carbon atoms. More preferably, R is chosen from the group of methyl, ethyl, n-propyl, isopropyl, n-butyl, i-butyl, sec-butyl, t-butyl, phenyl or substituted phenyl wherein the substituents may be linear or branched alkyl, aryl, halogene, alkoxy, phenoxy or nitro. Yet in a more preferred embodiment R is n-butyl or isopropyl.

In the embodiment when R³ is -COOR⁶, the trihydrocarbylsilylated unsaturated carboxylates of general formula (**I**) and the unsaturated carboxylic compound (**IV**) can be of either cis (maleic) or trans (fumaric) configuration.

In a more preferred embodiment the trihydrocarbylsilylated unsaturated carboxylates obtained by the process of the invention are trihydrocarbylsilyl acrylates or trihydrocarbylsilyl methacrylates.

The present invention will be further disclosed in detail hereunder.

### Detailed description of the invention

The present invention relates to a new process for the synthesis of trihydrocarbylsilylated unsaturated carboxylates according either to the general scheme 1: 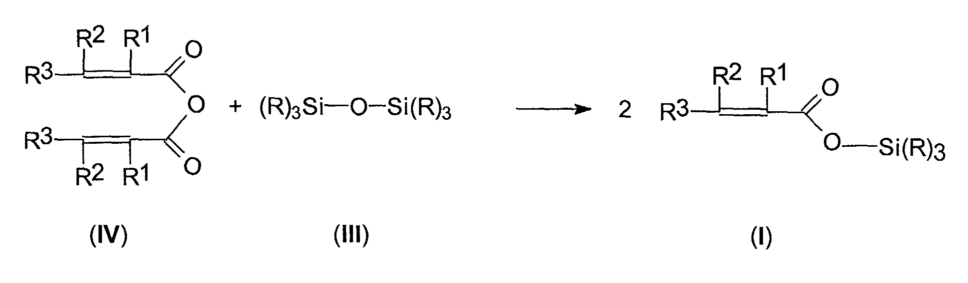 or to the general scheme 2 : 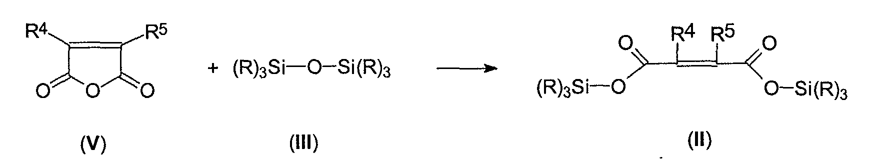 Unsaturated carboxylic anhydride represented by the above formula (**IV**) or (**V**) is mixed with hexahydrocarbyldisiloxane of formula (**III**) with or without inert solvent. Examples of inert solvents, which can be used in the process according to the invention, include hexane, cyclohexane, toluene or xylene. The reaction may be conducted with an added polymerisation inhibitor. The reaction progress may be monitored by any suitable analytical method.

Examples of unsaturated carboxylic anhydrides, which can be used in the process according to the invention include acrylic anhydride, methacrylic anhydride, crotonic anhydride, angelic anhydride, tiglic anhydride, maleic anhydride, citraconic anhydride (methylmaleic anhydride).

Examples of the trihydrocarbylsilylated unsaturated carboxylate monomers prepared by the process of the invention using (meth)acrylic anhydride include trimethylsilyl (meth)acrylate, triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-s-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, tri t-butylsilyl (meth)acrylate.

Other examples include ethyldimethylsilyl methacrylate, n-butyldimethylsilyl methacrylate, bis(trimethylsilyl) itaconate, t-butyl dimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, t-butyldiphenylsilyl (meth)acrylate, phenyldimethylsilyl (meth)acrylate, n-hexyldimethylsilyl (meth)acrylate, tert-octyldimethylsilyl (meth)acrylate, phenethyldimethylsilyl (meth)acrylate, (2-methyl)-phenethyldimethylsilyl (meth)acrylate, (2,3-dimethylbutyl)dimethylsilyl (meth)acrylate, cyclohexyldimethylsilyl (meth)acrylate and lauryldiphenylsilyl (meth)acrylate.

Examples of the trihydrocarbylsilylated unsaturated carboxylate monomers prepared by the process of the invention using maleic anhydride include bis triisopropylsilyl maleate, bis tri-n-butylsilyl maleate, bis t-butyldiphenylsilyl maleate, bis t-butyldiphenylsilyl maleate or the corresponding fumarate isomers.

The reaction is conducted in the presence of a catalyst, preferably in the presence of a catalyst consisting of a mixture of a strong acid and a nucleophilic base. Among strong acids that can be used, one can cite sulfuric acid, phosphoric acid, chlorhydric acid, bromhydric acid, hydriodic acid, trifluoromethanesulfonic acid or perfluoroalkylsulfonic acids, methanesulfonic acid, para-toluene sulfonic acid, trifluoroacetic acid. Strong ion exchange resins (sulfonated styrene copolymers) such as Amberlyst® 15 resin (CAS RN = 39389-20-3) or perfluoroalkylsulfonic resins such as Nation® NR50 resin (CAS RN = 118473-68-0) may also be used. Among nucleophilic bases that can be used, one can cite pyridine, 2- (dimethylamino)pyridine, 4-(dimethylamino)pyridine, 4-(4-methylpiperidino)pyridine, 4-pyrrolidinopyridine, imidazole, 1-methylimidazole, 2-methylimidazole, 4-methylimidazole, polymer- bound dimethylaminopyridine, 1-methylbenzimidazole, 2-methylbenzimidazole, benzimidazole.

The advantage of this invention is that the process uses reactants, which can be easily handled. Hexahydrocarbyl disiloxanes may be considered as easily accessible since they are formed as by-product during acidic deprotection of silyl protected reactive functional groups such as e.g. alcohols, amines or carboxylic acids (as described in "Protective Groups in Organic Synthesis" T.W.Greene and P.G.M.Wuts J.Wiley & Sons, 1999).

Another advantage lies in the simplicity and safety of the procedure (no byproducts, hence no trapping of corrosive gaseous matter).

Due to its one step process, the present invention is a substantial improvement over the existing methods.

Moreover, due to the possibility to use numerous hexahydrocarbyldisiloxane as reactant leading to the production of a wide range of trihydrocarbylsilylated unsaturated carboxylate monomers, the process of the present invention is a substantial improvement over the existing methods.

The trihydrocarbylsilylated unsaturated carboxylate monomers obtained by the process of the invention can be polymerised with various other monomers such as vinyl monomers including acrylic esters, methacrylic esters, styrene, vinyl esters (e.g., vinyl acetate, vinyl propionate, vinyl butyrate, vinyl benzoate), vinyltoluene, alpha-methylstyrene, crotonic esters, and itaconic esters.

The polymers and copolymers of said monomers are useful in coating or paint composition. More preferably they are used in antifouling coating or paint compositions.

The antifouling coating compositions prepared using the monomers obtained by the process of the invention are tin-free coatings and provide an alternative to the present self-polishing coating technology based on hydrolysable tributyltin polymers (the use of which is due to be banned in antifouling paints by 2003). The trihydrocarbylsilylated unsaturated carboxylate monomers provided by the process of the invention compared to organotin monomers are less toxic, less polar, more hydrophobic and more stable.

### Examples and comparatives examples

All the monomers used in the examples and comparative examples are purchased from Aldrich and used without any preliminary purification.
In examples 1 and 2, NMR datas have been determined in CDCI3 and are expressed as delta versus TMS.

### Example 1 (according to the invention)

285 mg of 4-(dimethylamino)pyridine and 352 mg of trifluoromethanesulfonic acid were successively added, at room temperature, to a mixture of 3.8g of hexamethyldisiloxane and 3.6g of methacrylic anhydride. The solution heated at 60°C for 16h to furnish trimethylsilyl methacrylate. Trimethysilyl methacrylate: ¹³C NMR : 167.7, 137.6, 127.1, 18.2, -0.257 ; ²⁹ Si NMR : 24.3; IR (film): 2963, 1703, 1335, 1256, 1178, 874, 854 cm⁻¹.

### Example 2 (according to the invention)

146 mg of 4-(dimethylamino)pyridine and 180 mg of trifluoromethanesulfonic acid were successively added, at room temperature, to a mixture of 5g of hexabutyldisiloxane and 1.8g of methacrylic anhydride. The solution was heated at 60°C for 16h to furnish tributylsilyl methacrylate. Tri-n-butylsilyl methacrylate: ¹³C NMR : 167.8, 137.9, 126.0, 26.7, 25.5, 18.5, 13.5, 14.0; ²⁹ Si NMR : 23.1; IR (film): 2959, 2927, 1703, 1334, 1174, 886, 766cm⁻¹.

### Example 3 (according to the invention)

185 mg of 4-(dimethylamino)pyridine and 228 mg of trifluoromethanesulfonic acid were successively added, at room temperature, to a mixture of 5 g of hexaisopropyldidiloxane and 2.33 g of methacrylic anhydride. The solution was heated at 90°C for 24 h to furnish triisopropylsilyl methacrylate Triisopropylsilyl methacrylate: ¹³C NMR: 167.7, 138.0, 126.2, 18.8, 18.1, 2.4; ²⁹Si NMR: 21.8; IR (film): 2949, 2870, 1703, 1334, 1178, 884, 751 cm⁻¹.

Comparative example 1 (according to J.Valade in Compte Rendu de l'Académie des Sciences n° 246, p. 952-953 (1958)) 8.4 g of zinc chloride were added, at room temperature, to a mixture of 5 g of hexamethyldisiloxane and 6.25 g of methacrylic anhydride. The solution was heated at 110°C. After 16h no transformation was observed.

### Comparative example 2:

352 mg of trifluoromethanesulfonic acid were added, at room temperature, to a mixture of 5 g of hexamethyldisiloxane and 6.25 g of methacrylic anhydride. The solution was heated at 60°C. After 16h no transformation was observed.

### Comparative example 3:

285 mg of 4-(dimethylamino)pyridine were added, at room temperature to a mixture of 5g of hexamethyldisiloxane and 6.25 g of methacrylic anhydride. The solution was heated at 60°C. After 16h no transformation was observed.

### Comparative example 4:

185 mg of pyridine and 352 mg of trifluoromethanesulfonic acid was added, at room temperature, to a mixture of 3.8 g of hexamethyldisiloxane and 3.6 g of methacrylic anhydride. The solution was heated at 60°C. After 16h no transformation was observed.

## Claims

1. Process for the preparation of trihydrocarbylsilylated unsaturated carboxylate monomers of either general formula (**I**) 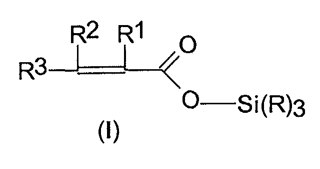 wherein
each R independently represents an alkyl, an aryl or a substituted aryl group,
R¹, R² each independently represents a hydrogen atom or an alkyl group,
R³ represents a hydrogen atom, an alkyl group or -COOR⁶ wherein R⁶ represents an alkyl, an aryl group or a substituted aryl group.
or general formula (**II**) 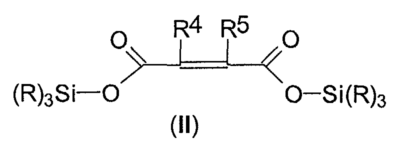 wherein
each R is as already defined above
R⁴, R⁵ each independently represents a hydrogen atom or an alkyl group.
which process comprises the step of reacting, in the presence of a catalyst, a hexahydrocarbyldisiloxane of formula (**III**)
(R)₃Si―O―Si(R)₃ (III)
wherein
R is as already defined above
either with an unsaturated carboxylic anhydride of formula (**IV**), 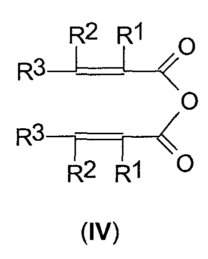 wherein
R¹, R², R³ are as already defined above
or with an unsaturated carboxylic anhydride of formula (**V**) 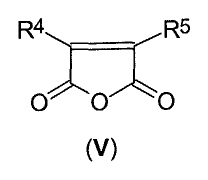 wherein R⁴, R⁵ are as already defined above.

2. A process according to claim 1, wherein R and R⁶ each independently represent a linear, branched, cyclic alkyl, aryl or substituted aryl group, saturated or unsaturated, containing from 1 to 12 carbon atoms, preferably from 1 to 6 carbon atoms, more preferably from 1 to 4 carbon atoms, yet more preferably 4 carbon atoms.

3. A process according to claim 2 wherein R each independently are chosen from the group of methyl, ethyl, n-propyl, isopropyl, n-butyl, i-butyl, t-butyl, phenyl or substituted phenyl.

4. A process according to claim 3 wherein R are n-butyl or isopropyl.

5. A process according to claim 3 wherein phenyl is substituted by linear or branched alkyl, aryl, halogene, alkoxy, phenoxy or nitro.

6. A process according to claim 1, wherein the unsaturated carboxylic anhydrides of formula (IV) are selected from the group of acrylic anhydride, methacrylic anhydride, crotonic anhydride, angelic anhydride, tiglic anhydride.

7. A process according to claim 1, wherein the unsaturated carboxylic anhydrides of formula (V) are selected from the group of maleic anhydride, citraconic anhydride.

8. A process according to claim 1 wherein the catalyst consists of a mixture of a strong acid and a nucleophilic base.
